# EUROPEAN PATENT SPECIFICATION

(11) **EP 0 953 086 B1**
(45) Date of publication and mention of the grant of the patent: **12.03.2003**
(21) Application number: 97910480.9
(22) Date of filing: 27.10.1997
(51) Int. Cl.: E04B 1/80, E04B 1/61, E04C 2/26

(54) **A JOINT STRUCTURE AND A METHOD UTILIZING SAID STRUCTURE**
VERBINDUNGSANORDNUNG UND VERFAHREN ZU IHRER ANWENDUNG
Structure d'assemblage et procédé d'utilisation de cette structure

(30) Priority: 25.10.1996 FI 964321; 03.02.1997 FI 970460
(43) Date of publication of application: 03.11.1999
(73) Proprietor: Paroc Group Oy Ab, 01300 Vantaa (FI)
(72) Inventor: WILLBERG, Jim, FIN-21600 Parainen (FI); WILLMAN, Tarmo, FIN-20780 Kaarina (FI)
(74) Representative: Haimelin, Jukka Ilmari
(86) International application number: FI9700657
(87) International publication number: WO98019023

(56) References cited:
- EP-A- 0 345 416
- EP-A- 0 684 348
- DE-A- 2 521 590
- FR-A- 1 548 632

## Description

The present invention relates to a joint structure for coupling sandwich-type panels in building structures, as well as to the utilization of the properties of the novel joint structure in the installation of such panels. These panels are comprised of a core made from a resilient thermal insulation material, which over at least one of its wide sides is faced with a skin plate. The skin of the panel is generally made from sheet metal, which is bonded to the insulation material by means of an adhesive. Conventionally, a panel component is lined from both sides with a skin plate. For the jointing of the panels, the skin plate is made to overlap the insulation layer at the edge of the panel and is folded back onto the core of the panel so as to form a tongue-and-groove joint structure in which a tongue formed from the skin plate so as to run longitudinally as a ridge along the panel edge is adapted to enter a compatible longitudinal groove formed to the mating edge of an adjacent panel in a similar manner from the skin plate of that panel. During mounting, the edges of the panels will mate perfectly with each other at their tongue-and-groove joint structure, and resultingly, at their insulation layers, whereby they are anchored at predetermined points and with appropriate means to the framework of the building.

Panel handling, installation and mounting into assembled entities involve situations in which the panels need to be jointed with each other in a fixed manner. Conventionally, such a jointing has been performed at the panel tongue-and-groove joints, whereby a plurality of different fastening techniques are known in the art to accomplish this task. Examples of such fastening techniques are disclosed in DE-A-2 521 590, EP-A-0 345 416 and EP-A-0 684 348. Some of these arrangements include fasteners which are placed between the abutting skin plates in the panel joint. Alternatively, some embodiments utilize members adapted to extend in the joint over the entire length of the panel edge. A conventional arrangement for jointing panels is based on the use of a screw fastener, whereby the skin plate of the panel is penetrated with screws of sufficient length to reach the structure of the adjacent panel in the tongue-and-groove joint. All these prior-art approaches are handicapped by deteriorating the tightness, thermal insulation capability and/or fire resistance of the interpanel joint.

It is an object of the present invention to provide a joint structure free from the above-described shortcomings. The goal of the invention is achieved in the discussed wall panels and similar structures by virtue of a joint structure specified by the characteristics of appended claim 1.

In the following, the invention will be described in more detail with reference to the appended drawings in which
Figure 1 shows a panel joint in which both of the wide sides of the panels are provided at their edges with a joint according to the invention, in which joint the clamp element forming an integral member of the joint structure is preinstalled;
Figure 2 shows a first embodiment of the joint structure according to the invention in an enlarged scale;
Figure 3 shows a second embodiment of the joint structure according to the invention in an enlarged scale;
Figure 4 shows a third embodiment of the joint structure according to the invention in an enlarged scale;
Figure 5 shows a specific embodiment of a continuous-section clamp strip suited for use in the joint structure according to the invention; and
Figure 6 shows a specific embodiment of the joint structure according to the invention.

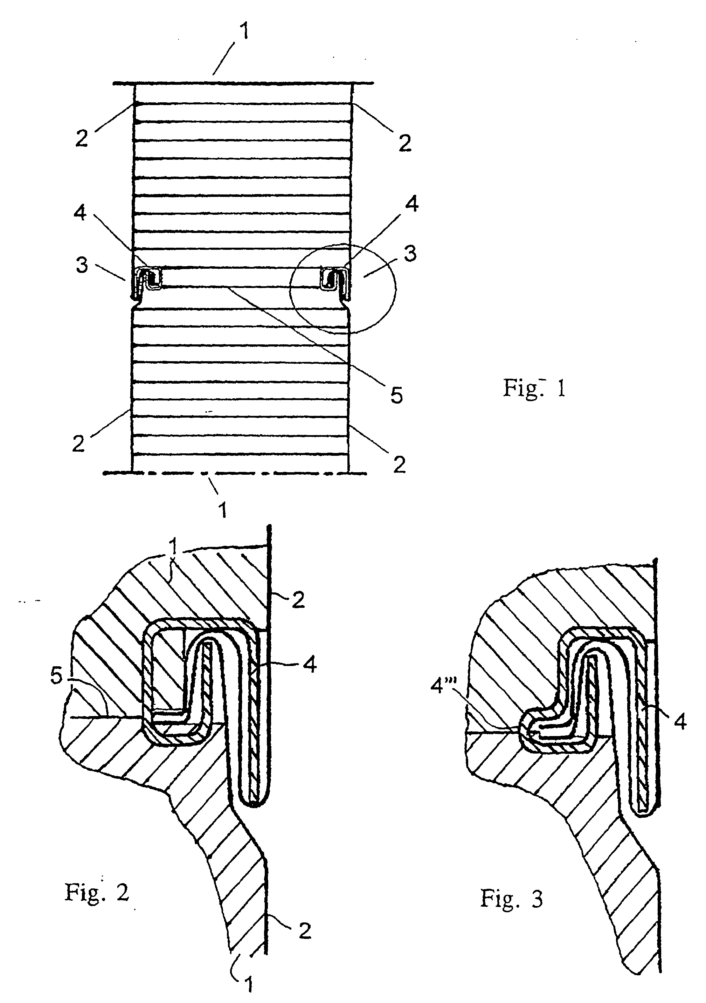

Referring to Fig. 1, therein is shown the structure of a conventional building panel, particularly a wall panel, comprised of a thermal insulation layer 1 and a skin sheet 2 facing the insulation layer from both sides. The insulation layer is typically made from high-bulk mineral wool to which skin sheets made from sheet metal are bonded using an adhesive. At the edges of the wide surfaces the skin sheets 2 of the panel are arranged to partially overlap the insulation layer 1, thus permitting their shaping by bending into mating tongue-and-groove joint surfaces at the panel edges. This tongue-and-groove structure is implemented so that, in the panels to be jointed, a tongue formed from the skin sheet of the first panel so as to run longitudinally along the edge thereof is adapted to sink into a compatible groove formed analogously from the skin sheet of the second panel so as to run longitudinally along the edge thereof. By virtue of such a joint structure, the portion of the joint visible to the exterior of the panel is minimized. At the erection site, the jointed panels are anchored to the framework of the building. Panel fastening is accomplished either at the unjointed panel ends only or, additionally, also over the area of the joints 3 with the help of fasteners having a shape compatible with the joint structure.

According to the invention, the embodiment shown in Figs. 1 and 2 implements the jointing of panels by means of a strip-like clamp element 4 shaped so that, when said clamp strip is installed in place so as to run longitudinally along the joint of the tongue-and-groove structure 3, it will tightly pull together the joint member surfaces of the skin sheets 2 abutting each other in the joint of the coupled panels. The cross section of the clamp strip is essentially G-shaped and dimensioned to be compatible with the tongue-and-groove joint shape used. An essential property related to the shaping of the clamp strip 4 is that it remains entirely concealed in the interior of the panel edge, whereby no part of the clamp strip will extend into the nip between the skin sheet surfaces 2 of the adjacent panel edges mating in the joint nor, in direction of the panel thickness, into the nip between the insulation layers 1 of the adjacent panels mating in the joint 5. In the embodiment of Figs. 1 and 2 illustrating a clamped interpanel joint, the inward-bent edge of the continuous-section clamp strip reaches into the interior of the lower panel tongue, while the outer edge of the clamp strip-reaches around the folded groove of the upper panel edge, however, remaining concealed in the interior of the panel core.

This type of a clamping arrangement acts on the joint via two clamping points, one in the area about the inner edge of the clamp element and another at the bottom of the panel edge groove. Hence, in the case of the present invention, the contact force imposed by the clamp strip on the mating skin sheet surfaces of the joint must be interpreted to represent a low-force clamping arrangement, principally intended to accomplish a gapless joint. However, a moderate clamping force may be encountered, e.g., in applications having the insulation layer 1 in the plane of the panels overlapping the abutting skin sheet surfaces in the tongue-and-groove joint area. Herein, even a modest clamping force will assure tight abutting of the insulation layer edges in the joint.

In a special embodiment of the invention to be described later, a greater clamping force, which is also feasible by means of the clamp element, will be of great importance. As a general rule, however, the clamp element must have such a rigid structure that it can keep the joint in a gapless condition also under stresses imposed on the joint.

For most applications it is essential that the clamping force exerted by the clamp element is directed primarily against forces acting in the plane of the wide sides of the panel which tend to open the joint. However, the applications of the clamp strip will be wider if it can provide a clamping or fastening force also in another direction, perpendicular to the wide sides of the panels. This property is achieved by inserting the outer edge of the clamp strip 4 into the internal space remaining between groove and the skin sheet 2. Here, the edge of the strip is made to rest against these parts of the joint, thus acting against forces which tend to cause outward bulging or inward buckling of the joint. This capability of the joint to resist a bending force is of particular importance under fire when the rigidity of the panel structure is compromised by the mechanical weakening of the thermal insulation 1.

The resistance of the joint to bending is achieved in an accentuated form in an embodiment illustrated in Fig. 3. Herein, one edge of the clamp strip 4 is shaped so as to conform better to the shape of the tongue-and-groove joint in the core space of the panel, whereby an additional notch 4''' in the cross section of strip is required. This additional notch improves the lateral stiffness of the strip and facilitates the alignment of the inward-bent edge of the strip in the internal furrow of the tongue-and-groove structure into a position improving the resistance of the structure to forces tending to cause bulging or buckling of the joint. Hence, this structure maximizes the synergistic cooperation of the bonding strip with the shape of the tongue-and-groove joint so as to increase the shape rigidity of the joint.

As can be seen from Figs. 1, 2 and 3, the interpanel clamp element formed by the clamp strip 4 is designed embracingly mountable about the abutting tongue-and-groove joint members of the adjacent panels by way of inserting the continuous-section strip by pushing it into the joint at the corner of the interpanel joint, whereby it slides over the joint members. The insulation layer 1 may have a prefabricated cavity to accommodate the insertion of the clamp strip.

The strip acting as a clamp may be prefabricated into a continuous section with a length equal to that of the interpanel joint, or alternatively, the clamping of the joint may be accomplished using shorter lengths of the strip placed at appropriate places along the joint. When such shorter sections of the strip are used, they will not compromise the tightness of the joint either, because no part of the clamp strip extends into the nip between the abutting joint member surfaces made from the skin sheet 2. The use of a full-length strip in the joint provides a rigid support for hanging fixtures and similar needs over the whole length of the joint.

Particularly in vertical joints, it is advisable to use a strip extending over the entire length of the joint, whereby the strip simultaneously forms a vertical framework member into the joint contributing to higher rigidity of the installed wall.

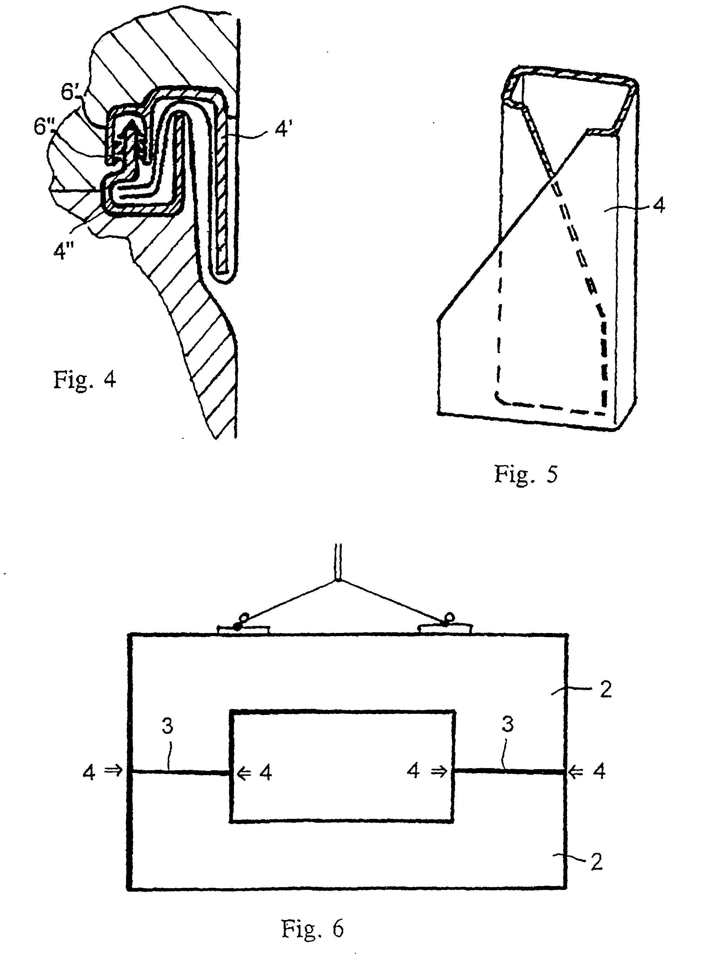

According to a specific property of the invention, the clamp element is implemented in the form of a longitudinally-split dual-member combination strip (refer to Fig. 4), having the compatible strip halves 4', 4" equipped with mating members 6', 6". These mating members 6', 6" are designed to cooperate so that when the strip halves are pressed together by a force acting perpendicular to the strip (in the plane of the panel), the members will interlock. This arrangement facilitates the fabrication of the panel joint with the clamp elements preinstalled in the tongue-and-groove joint structures of the panels, whereby clamping of the joints is accomplished simultaneously with the installation of the panels.

According to another specific property of the invention, the clamp element 4 is made wedge-shaped in its longitudinal direction, whereby this kind of clamp element when inserted into the joint, over the whole length of the joint, renders a powerful compressive effect. Such a property may be utilized advantageously in vertical interpanel joints, where the own weight of the panels does not contribute to the tightness of the joints.

In the consolidation of a multipanel structure, another specific property of the invention related to the self-locking behaviour of the clamp element is useful. Owing to this property, the panels are prevented from becoming slidingly displaced with respect to each other in the direction of their interconnecting joint. Such a locking property can be achieved by means of suitable contouring or preparation of the clamp strip and/or the mating surfaces of the interpanel tongue-and-groove joint surfaces, whereby outdents and compatible indents or notches and compatible crest formations may be contemplated.

Owing to the above-described properties, the joint structure according to the invention is particularly suited for use in prefabricated walls and other similar building components. For instance, a modular wall panel can be provided with an opening at the interpanel joints without the need for separate high-rigidity jamb structures.

Another essential advantage of the novel arrangement is related to its benefits in the erection of structures assembled from prefabricated modular components. For the installation of prefabricated building components, a plurality of implements have been developed, one of which is described in Int. Pat. Appl. No. WO93/20004. Herein, the lift device is designed to grab the tongue-and-groove structure at the edge of the modular building component, and the component can be elevated by means of such a device hanging by its horizontal edge to its destined installation site. According to current installation practice, the modular components are transferred by means of a lift to their destined site one by one from a stack, where they are lying in a horizontal position waiting for installation. However, the one-by-one lifting technique of panels forms a bottle-neck to the progress of building erection, which obviously forms a shortcoming particularly with regard to the above-discussed modular components in which the component weight in itself remains far below the lifting capacity limits of equipment conventionally employed at building sites. According to a specific property of the invention, this drawback can be overcome by virtue of the inventive procedures characterized in appended claim 8.

Hence, according to the above-mentioned specific property of the invention, the circumstances for the lifting step of building components are prearranged so that two or a greater number of building components destined to a given installation are brought onto the lift platform. During this step, the destined installation order of the components must be considered so that, according to the this order, the components are placed with their adjacent edges abutting so that the desired combination of components has their mating tongue-and-groove joint members aligned with each other. Next, all the components of the assembly to be lifted as an entity are clamped together by their aligned tongue-and-groove edges at their joints using the clamp strip designed to cooperate with said joint structure, whereby an integrated subassembly is formed suitable for lifting as an entity.

The tongue-and-groove structure, by means of which the building components to be lifted as an entity are clamped together, may be used as a vertical or horizontal tongue-and-groove joint in the installation. A particular improvement in the speed of building erection has been attained by virtue of an installation method in which the building components are elevated to their destined site of installation by their horizontal edge, advantageously hanging by their horizontal tongue-and-groove joint members in the position corresponding to their destined location. Using this installation technique, even a greater number than two of the building components can be simply clamped to each other for lifting them together, hanging from each other, to the destined site of installation. Not limited by the novel technique, the installation can be carried out using the same implements as those employed in lifting building components individually. However, it must be noted that the advantageous applications of the disclosed method are not limited by the exemplifying embodiment, but rather, can be utilized in conjunction with most of the erection equipment currently used in the art.

According to a first technique, the invention is implemented so that the building components to be lifted as an entity are clamped to each other already at their manufacturing or storage site prior to their transport to the erection site. Herein, the designated installation order of the building components, as well as the loading order of component subassemblies for transport, must be taken into account when clamping the components together. After jointing, the subassemblies comprising the jointed building components are stacked for transport, advantageously into bunches formed by horizontally lying component subassemblies, from which stacks the ready-jointed component subassemblies can be lifted at the erection site into their installation positions layer by layer, each comprising a prefabricated subassembly.

According to an alternative technique, the subassembly to be lifted as an entity is assembled at the erection site. Herein, the building components are picked, e.g., from a stack, in which they have been transported in a horizontal position to the erection site, onto an assembly platform keeping the components all the time in their horizontal position, and the tongue-and-groove joints to be clamped together are aligned. The building components are clamped together in the above-described manner by their joints and lifted into their installation position as an integral subassembly. The subassembly may be clamped by tongue-and-groove joints intended to be either horizontal or vertical in their final installation position. Obviously, the selected jointing scheme must also be taken into account in the lifting implements used.

For convenient operation at the erection site, a still further alternative technique is to transport the building components resting on their edges using, e.g., a purpose designed transport rack. Herein, the jointing of components into a subassembly is performed so that, in a descending order, above the upper edge of the first component of the subassembly to be installed is lifted the component designated to be the second component of the subassembly, after which the tongue-and-groove members of the intercomponent joints are aligned and clamped together. Obviously, a similar transport rack may also be utilized for hauling prejointed components to an erection site with the components already placed resting on their edge.

## Claims

1. A joint structure for coupling components used in building structures, said structure comprising components being comprised of a core (1) made from a thermal insulation material and of skin plate (2), which is bonded to at least one of the wide surfaces of the component and is arranged to overlap the edge of the component wide surface intended to act as one edge of the joint, whereby the overlapping edge of the skin plate in either of the adjacent components is shaped by bending so as to form a tongue-and-groove joint structure (3) in which the tongue, folded from the skin plate of a first component, enters a groove folded from the skin plate of a second component, **characterized in that** for the clamping of the joint, the joint structure includes a continuous-section clamp strip (4) with an essentially G-shaped cross section, said clamp strip (4) being installed into the interior of said joint structure so that the inward-bent edge of the continuous-section clamp strip reaches into the interior of the tongue formed from the skin plate of the first component in the tongue-and-groove joint, while the outer edge of the clamp strip reaches in the interior of the joint around the groove formed from the skin plate of the second component in the tongue-and-groove joint.

2. The joint structure as defined in claim 1, **characterized in that** the clamp strip (4) of essentially G-shaped cross section is dimensioned to exert a clamping force sufficient to keep the mating parts of the joint in gapless contact with each other.

3. The joint structure as defined in claim 2, **characterized in that** said clamping force is directed essentially in the plane of the wide surfaces of the jointed components and/or essentially perpendicular to said direction.

4. The joint structure as defined in any of foregoing claims 1-3, **characterized in that** said clamp strip (4) of essentially G-shaped cross section is self-locking in the longitudinal direction of the intercomponent joint.

5. The joint structure as defined in any of foregoing claims 1-4, **characterized in that** said clamp strip (4) of essentially G-shaped cross section is insertable into its clamping position in the longitudinal direction of the intercomponent joint.

6. The joint structure as defined in any of foregoing claims 1-5, **characterized in that** said clamp strip (4) of essentially G-shaped cross section has at least one of its edges made wedge-shaped in the longitudinal direction of the intercomponent joint for the purpose of tightening the joint during the insertion of said clamp strip.

7. The joint structure as defined in any of foregoing claims 1-5, **characterized in that** said clamp strip (4) of essentially G-shaped cross section is divided along its longitudinal direction into two members (4',4") which during their pushing together in the plane of said components mate so as to form a self-locking clamp element.

8. A method for installing building wall panels and similar modular components having a joint structure as defined in any of foregoing claims 1-7, **characterized in that** the individual components are arranged in the correct mutual installation order into groups of at least two components having aligned tongue-and-groove joint structures (3), and the components are clamped to each other at their aligned tongue-and-groove joint structures (3) and elevated into their designated installation positions as ready-jointed entities.

9. The method as defined in claim 8, **characterized in that** the individual components are arranged into groups having their tongue-and-groove joint structures (3) aligned, jointed and extending horizontally, after which the ready-jointed batch is elevated into the designated installation position hanging from the horizontal tongue-and-groove joint structure of the component to be situated uppermost in the final installation.

10. The method as defined in claim 8 or 9, **characterized in that** the individual components to be elevated as a ready-jointed batch are clamped at their intercomponent joints during their manufacture and transported to the installation site as a ready-to-install entity having the components clamped to each other.

## Patentansprüche

1. Verbindungsanordnung zum Verbinden von Bauteilen, die in Gebäudekonstruktionen benutzt werden, wobei die Konstruktion Bauteile aufweist, die aus einem Kern (1) aus einem thermisch isolierenden Material hergestellt sind und eine Hautplatte (2) aufweisen, die mit wenigstens einer der breiten Oberflächen des Bauteils stoffschlüssig verbunden und so angeordnet ist, daß sie den Rand der breiten Oberfläche des Bauteils überlappt, der als ein Rand der Verbindung dienen soll, wobei der überlappende Rand der Hautplatte bei dem einen oder anderen der benachbarten Bauteile durch Biegen so geformt ist, daß er eine Zunge-Nut-Verbindungsanordnung (3) bildet, bei der die Zunge, die aus der Hautplatte eines ersten Bauteils gefaltet ist, in eine Nut ragt, die aus der Hautplatte eines zweiten Bauteils gefaltet ist, **dadurch gekennzeichnet, daß** die Verbindungsanordnung zum Verklemmen der Verbindung einen Klemmstreifen (4) mit einem kontinuierlichen, weitgehend G-förmigen Querschnitt aufweist, wobei der Klemmstreifen (4) im Inneren der Verbindungsanordnung so installiert ist, daß der nach innen gebogene Rand des Klemmstreifens mit kontinuierlichem Querschnitt in das Innere der aus der Hautplatte geformten Zunge des ersten Bauteils in der Zunge-Nut-Verbindung ragt, während der äußere Rand des Klemmstreifens in das Innere der Verbindung um die aus der Hautplatte des zweiten Bauteils in der Zunge-Nut-Verbindung herumgeformte Nut ragt.

2. Verbindungsanordnung nach Anspruch 1, **dadurch gekennzeichnet, daß** der Klemmstreifen (4) mit dem weitgehend G-förmigen Querschnitt so bemessen ist, daß er eine Klemmkraft ausübt, die ausreichend ist, um die ineinander greifenden Teile der Verbindung in spaltfreiem Kontakt miteinander zu halten.

3. Verbindungsanordnung nach Anspruch 2, **dadurch gekennzeichnet, daß** die Klemmkraft im wesentlichen in der Ebene der breiten Oberflächen der verbundenen Bauteile und/oder weitgehend senkrecht zu dieser Ebene ausgerichtet ist.

4. Verbindungsanordnung nach einem der vorstehenden Ansprüche 1 bis 3, **dadurch gekennzeichnet, daß** der Klemmstreifen (4) mit dem im wesentlichen G-förmigen Querschnitt in Längsrichtung der Verbindung zwischen den Bauteilen selbstverriegelnd ist.

5. Verbindungsanordnung nach einem der vorstehenden Ansprüche 1 bis 4, **dadurch gekennzeichnet, daß** der Klemmstreifen (4) mit weitgehend G-förmigem Querschnitt in Längsrichtung der Verbindung zwischen den Bauteilen in seine Klemmposition einführbar ist.

6. Verbindungsanordnung nach einem der vorstehenden Ansprüche 1 bis 5, **dadurch gekennzeichnet, daß** wenigstens einer der Ränder des Klemmstreifens (4) mit weitgehend G-förmigem Querschnitt in Längsrichtung der verbindung zwischen den Bauteilen keilförmig ausgebildet ist, um die Verbindung beim Einführen des Klemmstreifens abzudichten.

7. Verbindungsanordnung nach einem der vorstehenden Ansprüche 1 bis 5, **dadurch gekennzeichnet, daß** der Klemmstreifen (4) mit dem weitgehend G-förmigen Querschnitt entlang seiner Längsrichtung in zwei Teile (4', 4'') geteilt ist, die, während sie in der Ebene der Bauteile zusammengedrückt werden, so ineinander passen, daß sie ein sich selbst verriegelndes Klemmelement bilden.

8. Verfahren zum Installieren von Gebäudewandpaneelen und ähnlicher modularer Bauteile mit einer Verbindungsanordnung nach einem der vorstehenden Ansprüche 1 bis 7, **dadurch gekennzeichnet, daß** die einzelnen Bauteile in der richtigen gegenseitigen Installationsreihenfolge in Gruppen aus wenigstens zwei Bauteilen mit zueinander ausgerichteten Zunge-Nut-Verbindungsanordnungen (3) angeordnet werden und daß die Bauteile in ihren zueinander ausgerichteten Zunge-Nut-Verbindungsanordnungen (3) miteinander verklemmt und als fertig verbundene Einheiten in ihre vorbestimmten Installationspositionen gebracht werden.

9. Verfahren nach Anspruch 8, **dadurch gekennzeichnet, daß** die einzelnen Bauteile in Gruppen angeordnet werden, in denen ihre Zunge-Nut-Verbindungsanordnungen (3) geradlinig zueinander ausgerichtet sind, verbunden werden und sich horizontal erstrecken, wonach die fertig verbundene Anordnung in die vorbestimmte Installationsposition angehoben wird, wobei sie an der horizontalen Zunge-Nut-Verbindungsanordnung desjenigen Bauteils herabhängt, das in der endgültigen Installationsposition zuoberst liegen soll.

10. Verfahren nach Anspruch 8 oder 9, **dadurch gekennzeichnet, daß** die einzelnen Bauteile, um als fertig verbundene Anordnung angehoben zu werden, bei ihrer Herstellung in ihren Verbindungen zwischen den Bauteilen verklemmt und dann als fertig installierbare Einheit, bei der die Bauteile miteinander verklemmt sind, zum Installationsort transportiert werden.

## Revendications

1. Structure de joint pour le couplage de composants utilisés dans des structures de construction, ladite structure comprenant des composants constitués d'une âme (1) formée d'un matériau d'isolation thermique et d'une plaque de peau (2), qui est liée à au moins l'une des larges surfaces du composant et est aménagée pour chevaucher le bord de la large surface du composant censé agir comme un bord du joint, de sorte que le bord chevauchant de la plaque de peau dans l'un ou l'autre des composants adjacents soit façonné par pliage de manière à former une structure de joint à languette et rainure (3) dans laquelle la languette, repliée de la plaque de peau d'un premier composant, entre dans une rainure repliée de la plaque de peau d'un second composant, **caractérisée en ce que**, pour le blocage du joint, la structure de joint comprend une bande de blocage (4) à section continue à section transversale essentiellement en forme de G, ladite bande de blocage (4) étant installée à l'intérieur de ladite structure de joint de sorte que le bord replié vers l'intérieur de la bande de blocage à section continue atteigne l'intérieur de la languette formée depuis la plaque de peau du premier composant du joint à languette et rainure, tandis que le bord externe de la bande de blocage atteint l'intérieur du joint autour de la rainure formée depuis la plaque de peau du second composant dans le joint à languette et rainure.

2. Structure de joint selon la revendication 1, **caractérisée en ce que** la bande de blocage (4) de section transversale essentiellement en forme de G est dimensionnée pour exercer une force de blocage suffisante pour maintenir les parties correspondantes du joint en contact sans jeu l'une avec l'autre.

3. Structure de joint selon la revendication 2, **caractérisée en ce que** ladite force de blocage est dirigée essentiellement dans le plan des larges surfaces des composants joints et/ou essentiellement perpendiculairement à ladite direction.

4. Structure de joint selon l'une quelconque des revendications 1 à 3, **caractérisée en ce que** ladite bande de blocage (4) de section transversale essentiellement en forme de G est auto-bloquante dans la direction longitudinale du joint entre les composants.

5. Structure de joint selon l'une quelconque des revendications 1 à 4, **caractérisée en ce que** ladite bande de blocage (4) de section transversale essentiellement en forme de G peut être insérée dans sa position de blocage dans la direction longitudinale du joint entre composants.

6. Structure de joint selon l'une quelconque des revendications 1 à 5, **caractérisée en ce que** ladite bande de blocage (4) de section transversale essentiellement en forme de G a au moins l'un de ses bords conformé en coin dans la direction longitudinale du joint entre composants dans le but de bloquer le joint au cours de l'insertion de ladite bande de blocage.

7. Structure de joint selon l'une quelconque des revendications 1 à 5, **caractérisée en ce que** ladite bande de blocage (4) de section transversale essentiellement en forme de G est divisée le long de sa direction longitudinale en deux éléments (4', 4") qui, lorsqu'ils sont poussés ensemble dans le plan desdits composants, s'adaptent de manière à former un élément de blocage auto-verrouillant.

8. Procédé d'installation de panneaux de murs et de composants modulaires similaires pour la construction ayant une structure de joint selon l'une quelconques des revendications 1 à 7, **caractérisé en ce que** les composants individuels sont agencés dans l'ordre d'installation mutuel correct en groupes d'au moins deux composants ayant des structures de joint à languette et rainure (3) et les composants sont bloqués l'un avec l'autre sur leurs structures de joint à languette et rainure alignées et soulevés dans leurs positions d'installation prévues sous la forme d'entités prêtes à l'assemblage.

9. Procédé selon la revendication 8, **caractérisé en ce que** les composants individuels sont agencés en groupes ayant leurs structures de joint à languette et rainure (3) alignées, jointes et s'étendant horizontalement, après quoi l'ensemble prêt à l'assemblage est soulevé dans la position d'installation prévue pendant de la structure de joint à languette et rainure horizontale du composant pour être disposé en position supérieure dans l'installation finale.

10. Procédé selon la revendication 8 ou 9, **caractérisé en ce que** les composants individuels à soulever sous la forme d'un ensemble prêt à l'assemblage sont bloqués dans leurs joints entre composants au cours de leur fabrication et transportés au site d'installation comme entité prête à l'installation et dont les composants sont bloqués l'un avec l'autre.
